# EUROPEAN PATENT APPLICATION

(11) **EP 2 096 140 A1**
(43) Date of publication of application: **02.09.2009**
(21) Application number: 08425125.5
(22) Date of filing: 29.02.2008
(51) Int. Cl.: C08L 67/00, C09D 167/00

(54) **Powder compositions**

(71) Applicant: Cytec S.r.l., 36060 Romano d'Ezzelino (IT)
(72) Inventor: Minesso, Alessandro, 31020 San Zenone degli Ezzelini (TV) (IT); Moens, Luc, 1640 Sint-Genesius-Rode (BE); Amor, Alejandro, 36027 Cusinati di Rosà (VI) (IT)
(74) Representative: Tonon, Gilberto

(57) **Abstract**

There is disclosed a TGIC-free binder for a thermosetting powder coating composition, the binder comprising a blend of (i) 65 to 97 % by weight of at least one polyester which comprises COOH groups; has an acid number from 10 to 100 mg KOH/g, a T_{g} > 40°C; and an OH number ≤15 mg KOH/g; (ii) 0.5 to 20 % by weight of at least one polyester which comprises OH groups; has an OH number from 10 to 100 mg KOH/g, a T_{g} > 40°C; and a COOH number ≤15 mg KOH/g and (iii) 2.5 to 15 % weight of at least one cross-linker that comprises β-hydroxyalkylamide groups. Methods for preparing the binder and powder compositions using the binder are also disclosed.

## Description

The present invention relates to the field of powder compositions.

Powder compositions are widely used as paints and varnishes for coating a diverse range of objects. They are entirely solvent free, eliminating the problem of handling solvents. There is no waste as excess powder is not retained on the substrate to be coated, but is fully recoverable and reusable.

Most powder compositions are cured thermally and thermosetting powders generally contain heat-curable organic compounds as a binder together with fillers, pigments, catalysts and/or other additives to adapt the composition's properties to the desired end use. The most common heat-curable binders comprise mixtures of functional polymers (such as polyesters containing carboxyl groups) and cross-linking agents containing functional groups capable of reacting with these functional polymers.

Triglycidyl isocyanurate (TGIC) was a commonly used cross-linker as it produces coatings with good properties. However TGIC has been found to be relatively toxic. Therefore, the TGIC has been replaced by non toxic cross-linkers such as beta(β)-hydroxyalkylamides (HAA) which can be used where the powder composition contains a carboxy functional polyester. Suitable HAA cross-linkers are available commercially from EMS-Primid under certain trade names using the registered trademark Primid^{®}.

HAA cross-linked powders have different problems to those with TGIC. HAA is highly reactive and water is liberated when HAA reacts with the carboxyl groups which, due to bubbling, can produce defects in the coating (such as orange peel or pinholes). Thus with HAA it is more difficult to produce coatings with the smooth surface desirable for a glossy appearance.

To minimise the amount of gas bubbles remaining in the coating it is known that one can either reduce the melt viscosity of the powder, or inhibit the reactivity of the binder. However adding plasticizer to reduce melt viscosity also undesirably reduces the outdoor durability of the cured coating. The literature also teaches that the only effective means to slow the reaction between a carboxy functional polymer and HAA is to reduce the concentration of the reactive groups by using a polymer with a lower acid number and/or using less HAA.

The problems associated with replacing TGIC cross-linked coatings with those cross-linked with HAA are well known. They are further described in the prior art (for example see the applicant's earlier application WO 2004/083325 (applicant's case reference 22-32) from, from page 2, line 3 to page 3 lines 33, and this section is hereby incorporated herein by reference).

WO 94/11451 (DSM) (= EP 0668895-A) discloses a powder paint prepared from a polymer binder having a polyester or a polyacrylate that has free carboxy groups, where the average number of reactive groups per polymer molecule is less than two. The binder is cross-linked with HAA. The low functionality of the polymer reduces its reactivity. However these coatings are difficult to produce reproducibly and have reduced resistance to solvent.

WO 99/40143 (UCB) describes tertiary aliphatic carboxy-functionalised polyesters which are used a binder for a powder coating. On curing they produce very smooth blister free coatings exhibiting excellent outdoor durability and flexibility. However they are prepared from expensive raw materials.

WO 01/02505 (DSM) describes a thermosetting powder comprising a carboxy-functional amorphous aromatic polyester and a HAA cross-linker. The polyester also comprises (cyclo)aliphatic end groups which ensures that the reaction rate of the powder paint system is relative low compared to similar polyesters without such groups. However the presence of these groups also makes it difficult to prepare the polyesters in a reproducible way.

It would be desirable to produce TGIC free powder compositions which overcome some or all of the problems identified in the prior art and herein as none are completely satisfactory.

Surprisingly the applicant has discovered that improved TGIC-free powders can be obtained from a binder prepared by blending two different amorphous polyester resins, each one designed to optimise, a different and conflicting performance requirement in the final coating. The components can be simply be mixed together, no copolymerisation of different monomers is needed. The resulting blended binder when cross-linked with HAA can produce a blister free coating with a smoothness similar to TGIC-based systems and which also has outstanding mechanical properties and outdoor durability.

Therefore broadly in accordance with the present invention there is provided a binder for a thermosetting powder coating composition substantially free of triglycidyl isocyanurate (TGIC); the binder comprising a blend of:
(i) from about 65 to about 97 % by weight of at least one first polyester which comprises carboxy groups thereon; has an acid number of from about 10 to about 100 mg KOH/g, a glass transition temperature higher than about 40°C; and a hydroxy number of not more than about 15 mg KOH/g;
(ii) from about 0.5 to about 20 % by weight of at least one second polyester which comprises hydroxy groups thereon; has an hydroxy-number of from about 10 to about 100 mg KOH/g, a glass transition temperature higher than about 40°C; and a carboxy number of not more than 15 mg KOH/g; and
(iii) from about 2.5 to about 15 % weight of at least one cross-linker other than triglycidyl isocyanurate (TGIC), the cross-linker being capable of reacting with the reactive carboxy and/or hydroxy groups on the first and/or second polyester(s);
where the above weight percentages are calculated with respect to the total weight of components (i) (ii) and (iii) and are selected to total 100%.

Preferably the non-TGIC cross-linker (iii) comprises at least one β-hydroxyalkylamide (HAA) group.

Thus contrary to the teaching of WO 94/11451 the applicant has found it is not necessary to prepare a polymer of low reactivity with a functionality less than two to achieve the desired improvement in coating properties. Surprisingly similar if not improved mechanical properties to TGIC crosslinked powders can be achieved by cross-linking a mixture of different polyesters in an appropriate ratio with HAA.

### Carboxy functional polyester

Preferably the carboxy-functional first polyester (i) is present in the binder blend in an amount from 77 to 91.5 % by weight of the total binder

Conveniently the carboxy-functional first polyester (i) has an acid number of from 20 to 70 mg KOH/g.

Usefully the carboxy-functional first polyester (i) has a hydroxyl number of not more than about 10 mg KOH/g; most preferably less than about 5 mg KOH/g.

### Hydroxy functional polyester

Preferably the hydroxyl-functional second polyester (ii) is present in the binder blend in an amount from 5 to 15 % by weight of the total binder

Conveniently the hydroxy-functional second polyester (ii) has a hydroxy number of from 20 to 70 mg KOH/g.

Usefully the hydroxy-functional second polyester has an acid number of not more than about 10 mg KOH/g; most preferably less than about 5 mg KOH/g.

The terms of art used herein will be well understood and unless the context dictates otherwise may be given the meanings set out in the applicant's earlier co-pending European patent application EPA 07107170.8 (applicant's case reference 07-009D) from page 3, line 5 to page 7 line 23 (and/or in the corresponding sections in any subsequently published family members claiming priority from this as yet unpublished priority application.). This section is hereby incorporated herein by reference.

### Polyester(s) properties and preparation

Advantageously the first and/or second polyester(s) are amorphous and more advantageously may be further characterised by one or more of the following parameters:
number averaged molecular weight (Mₙ) from 1100 to 15000 daltons (most advantageously from 1600 to 8500 daltons), measured by gel permeation chromatography (GPC);
glass transition temperature (T_{g}) from 40 to 80°C, measured by Differential Scanning Calorimetry according to ASTM D3418 with a heating gradient of 20°C per minute; and/or
a Brookfield (cone/plate) viscosity accordingly to ASTM D4287-88, of at least 5 mPa.s, measured at 175°C to 15000 mPa.s and at 200°C.

The polyacid(s) used to prepare the first and/or second polyester(s) may comprise:
(a) from about 70 to about 100 mol% terephthalic acid (TPA) and/or isophthalic acid (IPA); and
(b) optionally from about 0 to about 30 mol% of additional polyacid(s): preferably selected from one or more aliphatic, cycloaliphatic or aromatic diacids, such as: fumaric acid, maleic acid, phthalic anhydride, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, trimellitic acid or pyromellitic acid and/or their corresponding anhydrides and/or any suitable mixtures thereof.

Preferably the polyacid(s) (in additional to the IPA or TPA) that may optionally be used to prepare the first and/or second polyester(s) comprise adipic acid and/or trimellitic anhydride.

The polyol(s) used to prepare the first and/or second polyester(s) may comprise:
(a) from about 70 to about 100 mol% neopentyl glycol (NPG); and
(b) optionally from about 0 to about 30 mol% of another glycol constituent selected from one or more (cyclo)aliphatic glycols such as: ethylene glycol, diethylene glycol, propylene glycol, 1,4-butanediol, 1,6-hexanediol, 1,4-cyclohexanediol, 1,4-cyclohexanedimethanol, 2-methyl-1,3-propanediol, 2-ethyl, 2-butyl-1,3-propanediol, hydrogenated Bisphenol A, hydroxypivalate of neopentyl glycol, glycerol, trimethylolpropane, ditrimethylolpropane, pentaërythrytol and/or any suitable mixtures thereof.
   The first and/or second polyester(s) may be prepared in an conventional manner (for example carboxy-functional polyesters may be prepared as described in the applicant's earlier application WO 2004/083325, page 5, from lines 12 to 32, and this section is hereby incorporated herein by reference.

In particular antioxidants may be added during preparation of the polyester(s) to stabilise the colour of the product. Any of the following and/or mixtures thereof may be used: phenolic antioxidants such as Irganox 1010 (commercially available from Ciba); and/or phosphonite and/or phosphate type stabilisers such as tributylphosphite, triisooctylphosphite, triphenylphosphite, phosphorous acid and/or related esters. The optional anti-oxidant(s) may be added in an amount up to about 1% by weight of the reactants.

The polyesters described herein may be prepared using a conventional reactor equipped with a stirrer, an inert gas (nitrogen) inlet, a thermocouple, a distillation column connected to a water-cooled condenser, a water separator and/or a vacuum connection tube.

### Cross-linker

Preferably the non TGIC cross-linker (iii) is present in the binder blend in an amount from 3.5 to 8% by weight of the total binder.

The cross-linker (iii) used in the present invention may comprise at least one, preferably two bis(β-hydroxyalkyl)amide (HAA) groups. Suitable HAA cross-linkers are well known to those skilled in the art (for example those described in the applicant's earlier application WO 2004/08332, page 6, from lines 7 to 21, and this section is hereby incorporated herein by reference).

Conveniently the average structure of β-hydroxyalkylamide (HAA) cross-linker(s) (iii) used in the present invention may be represented by Formula I. 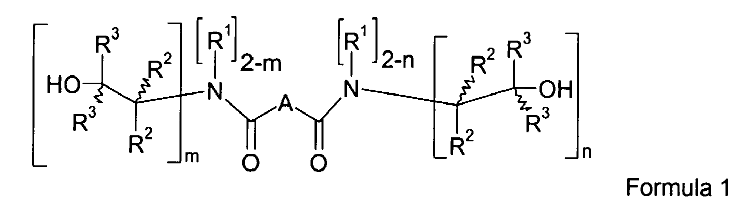 where:
A represents a divalent (optionally substituted) C₁₋₆₀organo (preferably hydrocarbo) linking group;
R¹ represents hydrogen, or a C₁₋₅alkyl group optionally substituted with one or more hydroxy;
R² and R³ are the same or different and each independently represents hydrogen or a C₁₋₅alkyl while one of the groups R₂ and one of the groups R³ may also form, together with the adjacent carbon atoms, a cycloalkyl group.
n and m are independently from about 1 to about 2, preferably from about 1.6 to about 2.

Conveniently in Formula 1, A represents a mono- or polyvalent organic group.
More conveniently A is selected from the group comprising:
an optionally substituted saturated or unsaturated C₁₋₆₀alkyl, (for example ethyl, methyl, propyl, butyl, pentyl, hexyl, heptyl, octyl, nonyl, decyl, eicosyl, triacontyl, tetracontyl, pentacontyl and/or hexacontyl);
an C₃₋₆₀aryl group (for example phenyl and/or, naphtyl);
a trialkylene (i.e. a divalent hydrocarbo) amino group, more conveniently comprising C₁₋₄alkylene (for example trimethylene amino and triethylene amino); and/or
an unsaturated radical comprising one or more C₁₋₄ alkenyl groups (-C=C-) (such as ethenyl, 1-methyl ethenyl, 3-butenyl-1,3-diyl and 2-propenyl-1,2-diyl), carboxyC₁₋₄alkenyl (for example 3-carboxy-2-propenyl), and/or C₁₋₄alkoxycarbonylC₁₋₄alkenyl (such as 3-methoxy carbonyl-2-propenyl)
Most conveniently in Formula 1, A represents C₁₋₁₀alkyl.

In another embodiment of the present invention, the HAA cross-linker (iii) may be represented by Formula II: 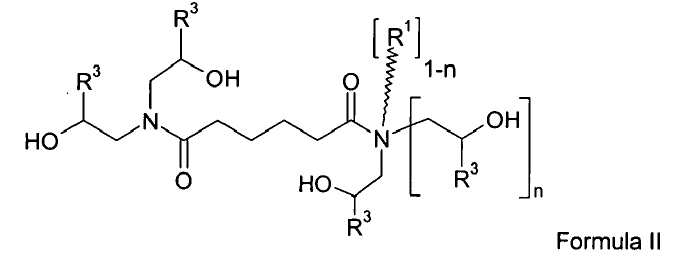 where
n is from 0.2 to 1,
R¹ is selected from hydrogen and C ₁₋₅ alkyl; and where either:
R³ is hydrogen (in which case Formula II represents the HAA cross-linker available commercially from EMS-Primid under the registered trademark Primid^{®} XL552) or
R³ is methyl group (Formula II is Primid^{®} QM1260).

If the HAA cross-linker represented by Formulae I and/or II is monodisperse then these Formulae represent a single molecule and n and m are independently zero or an integer. If the HAA is a polydisperse oligomeric and/or polymeric mixture (which is preferred) then these Formulae represent an average structure of the molecules in the mixture and n and m may be real numbers.

### Preparation of binder blend

Preferably the hydroxyl functional second polyester is blended, as a solid or as a liquid in the molten stage, with the carboxyl functional first polyester at the end of the synthesis of the first polyester whilst the first polyester is still molten.
Alternatively the hydroxyl functional second polyester, along with the crosslinker and the other constituents of the powder coating composition, may be added to the carboxy functional first polyester as a dry blend, which can then be melt-blended in an extruder.

### Formulation of powder

In addition to the essential components described above other well known ingredients can be added to the powder compositions of the present invention. Examples of such optional ingredients are described in the applicant's earlier application WO 2004/083325, from page 6, line 26 to page 7, line 2 and this section is hereby incorporated herein by reference.

The components of the composition of the invention may be mixed and coatings prepared and applied to a substrate by any suitable means such as those well known to those skilled in the art (for example as described in the applicant's earlier application WO 2004/083325 page 7, from lines 9 to 19 and this section is hereby incorporated herein by reference).

Many other variations embodiments of the invention will be apparent to those skilled in the art and such variations are contemplated within the broad scope of the present invention.

Further aspects of the invention and preferred features thereof are given in the claims herein.

### Examples

The present invention will now be described in detail with reference to the following non limiting examples which are by way of illustration only. Except when otherwise indicated, the parts mentioned in the examples are parts by weight.

Various registered trademarks, other designations and/or abbreviations are used herein to denote some of ingredients used to prepare polymers and compositions of the invention. These are identified below by chemical name and/or trade-name and optionally their manufacturer or supplier from whom they are available commercially. However where a chemical name and/or supplier of a material described herein is not given it may easily be found for example in reference literature well known to those skilled in the art: such as: 'McCutcheon's Emulsifiers and Detergents', Rock Road, Glen Rock, N.J. 07452-1700, USA, 1997 and/or Hawley's Condensed Chemical Dictionary (14th Edition) by Lewis, Richard J., Sr.; John Wiley & Sons.

Additol P896 is a master batch of a flow promoter containing 15% weight of active substance that is commercially available under this trademark from Cytec Surface Specialities.
Benzoin is a degassing agent available commercially under this name from BASF.
Blanc Fixe ABR is Ba SO₄ that is commercially available from Sachtleben Chemie.
Kronos 2160 is a titanium dioxide white pigment available commercially under this name from Kronos.
Primid XL 552 is a hydroxyalkylamide cross-linker commercially available under this trademark from EMS-Primid.

### Standard method

The examples were prepared according to the following standard method with reference to the table of Examples below.

### Preparation of pre-polymer - step one

Neopentyl glycol (NPG) ('a' parts) and ethylene glycol (GLY) ('b' parts) are placed in a conventional four neck round bottom flask equipped with a stirrer, a distillation column connected to a water cooled condenser, an inlet for nitrogen and a thermometer attached to a thermoregulator. The flask contents are heated, while stirring under nitrogen, to a temperature of about 140°C and then terephthalic acid (TPA) ('c' parts); trimellitic anhydride (TMA) ('d' parts); isophthalic acid (IPA) ('e' parts) and monobutylstannoic acid (MBS) ('f' parts) are added. The reaction is continued at 240°C under atmospheric pressure until about 95% of the theoretical amount of water is distilled and a transparent hydroxyl functionalised pre-polymer is obtained which is used directly in the next step.

### Preparation of polyester - step two

The prepolymer from the previous step is held at 200°C whilst adipic acid (APA) ('g' parts); 1,4-cyclohexanedicarboxylic acid (CHDA) ('h' parts); and isophthalic acid (IPA) ('i' parts) are added. Then the mixture is gradually heated to 230°C and held at that temperature for two hours. When the reaction mixture is transparent triisooctylphosphite (TOP) ('j' parts) is added and then the pressure of the reaction vessel is gradually reduced to 50 mm Hg and then held at that pressure and at 230°C for three hours to obtain a product which after collection is characterised as denoted in the table below where: AN and OHN denote respectively the acid number and the hydroxy number of the product measured in mg KOH/g; and BKF denotes its cone plate Brookfield viscosity measured at 200 °C in units of mPa.s

**Table**

| Functional polyesters (Examples 1 to 3) | | | | | | | | | | | | | |
|---|---|---|---|---|---|---|---|---|---|---|---|---|---|
| used to prepare binders of the present invention (Examples 4 and 5) | | | | | | | | | | | | | |
| | | | | | | | | | | | | | |
| Ex | Pre-polymer - step 1 | | | | | | Polyester - step 2 | | | | | | |
| | a | b | c | d | e | f | g | h | i | j | AN | OHN | BKF |
| | (NPG) | (GLY) | (TPA) | (TMA) | (IPA) | (MBS) | (APA) | (CHA) | (IPA) | (TOP) | | | |
| 1 | 366.83 | 15.97 | 544.92 | - | - | 0.53 | 31.06 | - | 61.53 | 1.18 | 20 | 2 | 4860 |
| 2 | 366.37 | 15.89 | 515.82 | - | - | 0.56 | 30.67 | 27.88 | 61.34 | 1.12 | 20 | 2 | 6440 |
| 3 | 481.26 | - | 546.40 | 46.02 | 67.41 | 0.65 | 31.06 | - | 61.53 | 1.18 | 2 | 64 | 2000 |

| | | | | | | | | | | | | | |
|---|---|---|---|---|---|---|---|---|---|---|---|---|---|
| Examples 1 and 2 are carboxy-functional polyesters and Example 3 is a hydroxy-functional polyester | | | | | | | | | | | | | |

### Example 4 & Comparative Example A

A white powder of the formulation 1 described below was prepared with different binders.

**Formulation 1**

| | |
|---|---|
| Binder | 605 |
| Additol P896 | 40 |
| Benzoin | 5 |
| Kronos 2160 | 350 |

In Example 4 the binder is a blend of the carboxy functional polyester of Example 1 (523 parts); with the hydroxy functional polyester of Example 3 (58 parts) and an HAA cross-linker - Primid XL 552 (24 parts). The blend was prepared by adding solid Example 3 (10 parts) to Example 1 (90 parts), the remaining polyester and cross-linking being blended in when molten at 180°C.

In Comparative Example A (Comp A) the binder consists of Example 1 (581 parts) with Primid XL 552 (24 parts); i.e. contains only carboxy-functional polyester.

### Example 5 & Comparative Examples B, C and D

A white powder of the formulation 2 described below was prepared with different binders.

**Formulation 2**

| | |
|---|---|
| Binder | 610 |
| Additol P896 | 35 |
| Benzoin | 5 |
| Blanc Fixe ABR | 100 |
| Kronos 2160 | 250 |

In Example 5 the binder is a blend of the carboxy functional polyester of Example 2 (531.6 parts); with the hydroxy functional polyester of Example 3 (59.1 parts) and an HAA cross-linker - Primid XL 552 (19.3 parts). The polyesters of Example 2 and Example 3 were blended before extrusion, together with all the other essential components of the formulation.

In Comparative Example B (Comp B) the binder consists of Example 2 (590.7 parts) with Primid XL 552 (19.3 parts); i.e. contains only carboxy functional polyester.

Formulation 2 was also prepared using current commercial binders.

In Comparative Example C (Comp C) the binder consists of the carboxy functional polyester available from Cytec Surface Specialties under the trademark Crylcoat 2619-3 (588.7 parts) with the HAA cross-linker Primid XL 552 (21.3 parts)..Comp C is generally accepted as a standard TGIC-free outdoor powder.

In Comparative Example D (Comp D) the binder consists of the carboxy functional polyester available from Cytec Surface Specialties under the trademark Crylcoat 2441-2 (567.3 parts) with the TGIC cross-linker available from Huntsman under the trade designation PT-810 (42.7 parts). Comp D is generally accepted as a standard powder that uses TGIC. The powder has a high flow and forms a coating that exhibit no blisters even when applied as a coating of high thickness.

### Preparation of powder formulations

After the binders have been prepared, the powder formulations of Examples 4 and 5 of the invention and Comparative Examples A to D are prepared conventionally by dry blending the different components. The dry blend is then melted and homogenised whilst molten using a PRISM 16 mm L/D 15/1 twin screw extruder at an extrusion temperature of 85°C. The homogenised mixture is then cooled and grinded in an Alpine grinder. The resultant powder is sieved to obtain a particle size between 10 and 110 µm.

### Coating

This powders obtained above are deposited on 1 mm thick Aluminium panels (Alodine 1200) by electrostatic deposition using the GEMA - Volstatic PCG 1 spray gun. When a coating thickness of about 110 µm has been obtained the panels are transferred to an air-ventilated oven, where the coating is thermal cured for 15 minutes at a temperature of 200°C.

### Results

The characteristics for the resultant coatings are given in the table below where (counting the columns from left to right):

| | |
|---|---|
| Column 1: | indicates the identification number of the formulation. |
| Column 2: | indicates the gel time of the powder, measured at 180°C according to DIN 55990 part 8 and where gel time values are recorded in seconds. |
| Column 3: | indicates the flow according to the Inclined Plate Flow Test according to ASTM D-3451 (17). In this test a small pellet of powder is placed on a aluminium plate and inserted into a heated oven at 200°C, the oven rack in which the aluminium plate rests, being tilted to an angle of 65°. After 30 minutes , the plate is removed from the oven and allowed to cool down to |
| | room temperature. The length of the flow then is measured in millimetres. The higher the measured length, the better the flow. |
| Column 4: | indicates the reverse impact strength (RI) and the direct impact strength (DI) according to ASTM D2794 which is the highest impact which does not crack the coating and is recorded in kg.cm. |
| Column 5: | indicates the visual evaluation where 10 stands for very smooth high gloss coating and 0 stands for strong orange peel coating with a reduced gloss 60° value. |
| Column 6: | indicates the twenty/sixty degree gloss, measured according to ASTM D523. |

**Coating test results**

| Example | Gel time | Flow | RI/DI | Visual | Gloss 20/60° |
|---|---|---|---|---|---|
| Ex. 4 | 250 | 63 | 160/160 | 9 | 88/96 |
| Comp A | 188 | 52 | 160/160 | 5 | 84/96 |
| Ex 5 | 220 | 59 | 160/160 | 9 | 85/96 |
| Comp B | 177 | 48 | 160/160 | 4 | 82/94 |
| Comp C | 205 | 49 | 160/160 | 5 | 84/96 |
| Comp D | 345 | 67 | 160/160 | 10 | 87/96 |

The results show that powder compositions of the present invention (Example 4 and 5) made from a binder of a blend of two different polyesters crosslinked with HAA, exhibit improved flow and blister resistance compared to current powders that also use a binder cross-linked with HAA but with a carboxy functional polyester alone (represented by Comp C). Powders of the invention have similar performance to current commercially available powders of high flow that use TGIC (represented by Comp D).

Without wishing to be bound by any theory, the applicant believes that addition of hydroxy-functional polyester to the binder induces longer gel times and higher flow lengths whilst preserving the mechanical properties. The data also shows that the powders of the invention maintain good impact resistance after aging for one month (as shown by their unchanged values for direct and reverse impact).

Coatings of the invention are smooth (due to the powder's high flow) and remain blister free at thicknesses up to 130 micron. This is in contrast to conventional HAA cross-linked powders (Comp A, B and C) where blisters can be observed in coatings from thicknesses as low as 80 micron.

It is also surprising that such an improved performance of a TGIC free powder can be achieved from a simple blend of different mono-functional polyesters rather than using a complex multifunctional polymer of low reactivity such as those disclosed in WO 94/11451.

## Claims

1. A binder for a thermosetting powder coating composition substantially free of triglycidyl isocyanurate (TGIC); the binder comprising a blend of:
(i) from about 65 to about 97 % by weight of at least one first polyester which comprises carboxy groups thereon; has an acid number of from about 10 to about 100 mg KOH/g, a glass transition temperature higher than about 40°C; and a hydroxy number of not more than about 15 mg KOH/g;
(ii) from about 0.5 to about 20 % by weight of at least one second polyester which comprises hydroxy groups thereon; has an hydroxy-number of from about 10 to about 100 mg KOH/g, a glass transition temperature higher than about 40°C; and a carboxy number of not more than 15 mg KOH/g; and
(iii) from about 2.5 to about 15 % weight of at least one cross-linker other than triglycidyl isocyanurate (TGIC), the cross-linker being capable of reacting with the reactive carboxy and/or hydroxy groups on the first and/or second polyester(s);
where the above weight percentages are calculated with respect to the total weight of components (i) (ii) and (iii) and are selected to total 100%.

2. A binder as claimed in the preceding claim, where the carboxy-functional first polyester (i) is present in an amount from about 77 to about 91.5 % by weight of the total binder.

3. A binder as claimed in any preceding claim, where the carboxy-functional first polyester (i) has an acid number of from about 20 to about 70 mg KOH/g.

4. A binder as claimed in any preceding claim, where the carboxy-functional first polyester (i) has a hydroxy number of not more than about 10 mg KOH/g;

5. A binder as claimed in any preceding claim, where the carboxy-functional first polyester (i) has a hydroxy number less than about 5 mg KOH/g.

6. A binder as claimed in any preceding claim, where the hydroxy-functional second polyester (ii) is present in an amount from about 5 to about 15 % by weight of the total binder.

7. A binder as claimed in any preceding claim, where the hydroxy-functional second polyester (ii) has an hydroxy number of from about 20 to about 70 mg KOH/g.

8. A binder as claimed in any preceding claim, where the hydroxy-functional second polyester (ii) has a carboxy number of not more than about 10 mg KOH/g;

9. A binder as claimed in any preceding claim, where the hydroxy-functional second polyester (ii) has a carboxy number less than about 5 mg KOH/g.

10. A binder as claimed in any preceding claim, where the cross-linker (iii) comprises at least one β-hydroxyalkylamide group.

11. A binder as claimed in any preceding claim, where the average structure of β-hydroxyalkylamide cross-linker(s) (iii) is represented by Formula I. 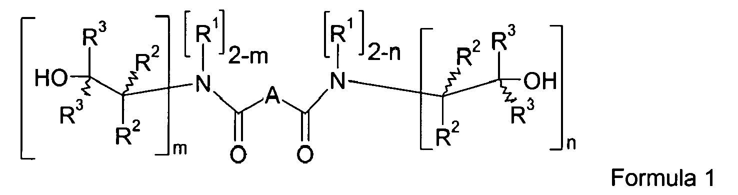 where:
A represents a divalent optionally substituted C₁₋₆₀organo linking group;
R¹ represents hydrogen, or a C₁₋₅alkyl group optionally substituted with one or more hydroxy;
R² and R³ are the same or different and each independently represents hydrogen or a C₁₋₅alkyl while one of the groups R² and one of the groups R³ may also form, together with the adjacent carbon atoms, a cycloalkyl group.
n and m are independently from about 1 to about 2.

12. A binder as claimed in any preceding claim, where the average structure of β-hydroxyalkylamide cross-linker(s) (iii) is represented by Formula II. 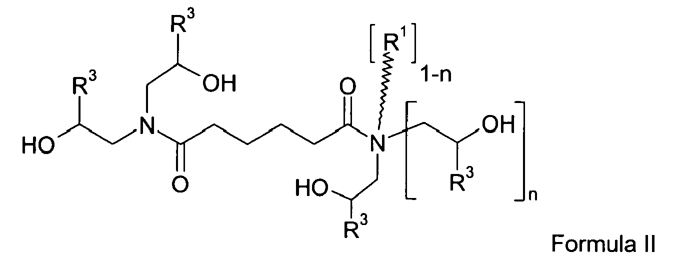 where
n is from 0.2 to 1,
R¹ is selected from hydrogen and C₁₋₅ alkyl; and where either:
R³ is hydrogen (in which case Formula II represents the cross-linker available commercially from EMS-Primid under the registered trademark Primid^{®} XL552) or
R³ is methyl group (then Formula II is Primid^{®} QM1260).

13. A binder as claimed in any preceding claim, where the first and/or second polyester(s) are amorphous.

14. A binder as claimed in any preceding claim, where the first and/or second polyester(s) are further **characterised by** one or more of the following parameters:
number averaged molecular weight (Mₙ) from 1100 to 15000 daltons (most advantageously from 1600 to 8500 daltons), measured by gel permeation chromatography (GPC);
glass transition temperature (Tg) from 40 to 80°C, measured by Differential Scanning Calorimetry according to ASTM D3418 with a heating gradient of 20°C per minute; and/or
an Brookfield (cone/plate) viscosity accordingly to ASTM D4287-88, of at least 5 mPas, measured at 175°C to 15000 mPa.s and at 200°C.

15. A method of preparing a binder as claimed in any preceding claim comprising the steps of;
(a) melting the carboxy-functional first polyester;
(b) adding the hydroxy-functional second polyester as a solid or liquid to the melt from step (a) together with the cross-linker.

16. A method of preparing a binder as claimed in any of claims 1 to 14 comprising the steps of dry blending the carboxy-functional first polyester; the hydroxy-functional second polyester and the cross-linker, optionally in a single step.

17. A binder obtained and/or obtainable by the method claimed in any of claims 15 to 16.

18. A method of preparing a thermosetting powder coating composition substantially free of triglycidyl isocyanurate (TGIC) and which comprises a binder as claimed in the immediately preceding claim, the method comprising the steps of:
(a) optionally dry blending the binder with any other components;
(b) melting the dry blend obtained from step (a);
(c) homogenising the blend whilst molten;
(d) optionally cooling the blend to ambient temperature;
(e) grinding the blend to form a powder;
(f) optionally sieving the powder to collect a powder having an average particle size from about 10 microns (µm) to about 110 microns (µm).

19. A thermosetting powder coating composition substantially free of triglycidyl isocyanurate (TGIC); the powder comprising a binder as claimed in any of claims 1 to 14 and 17 and/or the powder being obtained and/or obtainable by the method claimed in the immediately preceding claim.

20. A method of coating an article or substrate with a powder as claimed in the immediately preceding claim, comprising the steps of:
applying a powder as claimed in the immediately preceding claim to the article or substrate;
thermally curing the coated article or substrate to form a cured coating thereon.

21. An coated article or substrate obtained and/or obtainable by the method claimed in the immediately preceding claim.
